(19) Europäisches Patentamt
European Patent Office
Office européen des brevets

(11) **EP 2 894 444 A1**

(12) **DEMANDE DE BREVET EUROPEEN**

(43) Date de publication:
**15.07.2015 Bulletin 2015/29**

(51) Int Cl.:
*G01J 5/04* (2006.01)        *G01J 5/20* (2006.01)
*G01J 5/22* (2006.01)        *G01J 5/24* (2006.01)

(21) Numéro de dépôt: **15150357.0**

(22) Date de dépôt: **07.01.2015**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **08.01.2014 FR 1450120**

(71) Demandeur: **COMMISSARIAT A L'ENERGIE
ATOMIQUE ET AUX
ENERGIES ALTERNATIVES
75015 Paris (FR)**

(72) Inventeurs:
• **Pelenc, Denis
38950 QUAIX EN CHARTREUSE (FR)**
• **Armand, Marie-Françoise
38410 VAULNAVEYS-LE-HAUT (FR)**
• **Hyot, Bérangère
38320 EYBENS (FR)**
• **Imperinetti, Pierre
38180 SEYSSINS (FR)**
• **Vialle, Claire
38120 SAINT-EGREVE (FR)**

(74) Mandataire: **Nony
3, rue de Penthièvre
75008 Paris (FR)**

(54) **Matériau sensible pour la détection bolométrique**

(57)    La présente invention concerne l'utilisation comme matériau sensible en couche mince pour la détection bolométrique, d'au moins un matériau à base d'un alliage comprenant au moins un chalcogénure, l'élément chalcogène étant choisi parmi le soufre, le sélénium, le tellure et leurs mélanges, caractérisée en ce que ledit matériau contient en outre une quantité efficace de carbone et/ou de bore suffisante pour conférer au matériau une valeur de coefficient de variation relative de la résistivité avec la température, à 300 °C, au moins égale à 40 % de la valeur native du coefficient de variation relative de la résistivité avec la température dudit matériau à température ambiante.

L'invention concerne également un dispositif bolométrique et son procédé de préparation.

**FIGURE 2A**

**Description**

La présente invention concerne des matériaux sensibles utiles pour la détection bolométrique de rayonnements infrarouges par des matrices de microcapteurs.

Les détecteurs de rayonnements infrarouges peuvent être classés en deux catégories selon le principe physique qu'ils mettent en oeuvre. Les détecteurs quantiques et les détecteurs thermiques.

L'invention vise plus particulièrement le domaine des détecteurs thermiques.

Ces détecteurs fonctionnent avantageusement à température ambiante. Ils sont capables d'absorber un rayonnement infrarouge incident et de le convertir en chaleur. A cette fin, ils comportent généralement un élément sensible à base d'un matériau dont la résistance électrique varie avec la température. La variation de température de l'élément sensible engendre une variation de la résistivité électrique dudit élément sensible. Ces dispositifs permettent donc, à l'aide d'un montage électrique approprié, de convertir une modification de la température en signal électrique.

Selon la propriété utilisée, les détecteurs peuvent être de type thermoélectrique (thermopiles), pyroélectriques (pyromètres) ou bolométriques, ce dernier correspondant au domaine de l'invention.

Comme indiqué ci-dessus, les détecteurs bolométriques utilisent comme élément sensible un matériau dont la résistivité électrique varie avec la température. Cette résistivité est caractérisée par le coefficient de variation relative de la résistivité avec la température (TCR) du matériau, défini par la formule :

$$TCR = 1/\rho \, . \, d\rho/dT$$

où $\rho$ est la résistivité du matériau.

Un montage électrique approprié est utilisé pour convertir la modification de température en signal électrique. Ainsi, pour réaliser une image dans le domaine infrarouge, l'élément sensible placé dans le plan focal de la caméra est une matrice constituée de pixels bolométriques, chacun d'eux étant formé d'une membrane suspendue, isolée thermiquement de son support pour optimiser l'augmentation de température due à l'absorption. Cette membrane comprend généralement un matériau absorbeur du rayonnement infrarouge et le matériau sensible.

La réalisation de ces matrices de pixels fait appel aux techniques de dépôt de couches minces, de photolithographie, et de gravure mises en oeuvre dans le domaine des Micro Systèmes Electro-Mécaniques (MEMS).

Les matériaux sensibles utilisés pour la réalisation des matrices de pixels bolométriques doivent donc être compatibles avec les contraintes imposées par les étapes d'intégration. Les chalcogénures, matériaux à base de soufre, de sélénium ou de tellure, sont notamment proposés pour constituer ce matériau sensible.

Ainsi, US 3,781,748 décrit, à titre d'élément sensible, un verre chalcogénure $Tl_2SeAs_2Te_3$ d'une trentaine de microns d'épaisseur, qui met à profit la sensibilité de la résistivité de ce matériau avec la température. Toutefois, ce matériau est mis en oeuvre par une technique de pressage à chaud à une température proche de la température de transition vitreuse de ce matériau (aux alentours de 100 °C) qui est incompatible avec les techniques d'intégration des matrices de microbolomètres qui exposent le matériau à de hautes températures. En outre, une telle technique est également incompatible avec les exigences de maîtrise de l'épaisseur de couches qui doivent être de l'ordre de quelques dizaines de nanomètres d'épaisseur.

Le brevet US 3,767,928 décrit également la réalisation d'une matrice de détecteurs dont les éléments sensibles sont des chalcogénures. Cependant, le mode de réalisation de cette matrice de détecteurs n'est pas compatible avec celui mis en oeuvre dans les Micro Systèmes Electro-Mécaniques. En particulier, l'élément sensible n'est pas isolé thermiquement du substrat comme il l'est avec une membrane suspendue, ce qui entraine que le détecteur décrit dans ce document présente une faible sensibilité, incompatible avec les performances des matrices de détecteurs bolométriques actuellement commercialisées.

Plus récemment, le document US 2012/0132804 a décrit quant à lui la réalisation d'une matrice de microbolomètres à base de chalcogénures qui fait appel aux technologies des Micro Systèmes Electro-Mécaniques. Les matériaux qui y sont décrits présentent un coefficient TCR situé dans une gamme de valeurs très élevée, de l'ordre de 4 %/K, bien plus élevée que celui des matériaux classiquement utilisés tels que le Vox (mélanges d'oxydes de vanadium) et le silicium amorphe, dont les TCR sont de l'ordre de 1,5 à 2 %/K. Cette valeur élevée de TCR des matériaux chalcogénures les rend effectivement intéressants pour l'application en bolométrie. Toutefois, ces matériaux sont sensibles à l'exposition à des atmosphères oxydantes. Ainsi, lors de l'intégration des matrices de pixels bolométriques, et notamment lors de l'étape de la libération de la planche bolométrique par calcination de la couche sacrificielle, ces matériaux s'oxydent et deviennent alors inutilisables pour une application bolométrique. La solution retenue pour prévenir cette oxydation consiste généralement à isoler ces matériaux des atmosphères extérieures en les recouvrant d'une couche d'encapsulation. Cependant, la mise en oeuvre d'une telle couche nécessite d'exposer le matériau à des hautes températures, de l'ordre de 300 °C.

Or, comme illustré dans l'exemple 1, l'exposition de ces matériaux à de telles températures dégrade significativement leur coefficient TCR ce qui les rend inaptes à une application en bolométrie.

Ce même problème est rencontré lors du packaging sous vide des microbolomètres dans des boitiers hermétiques, nécessaire à leur fonctionnement, qui requiert de réaliser un étuvage de l'ensemble du boîtier et du microbolomètre, comprenant le matériau sensible, à des températures élevées, typiquement supérieures à 250 °C.

Il demeure donc un besoin de disposer d'un matériau sensible qui permet au moins en partie de suppléer aux déficiences discutées ci-dessus.

La présente invention vise précisément à répondre à ce besoin.

Ainsi, selon l'un de ses aspects, l'invention concerne l'utilisation comme matériau sensible en couche mince pour la détection bolométrique, d'au moins un matériau à base d'un alliage comprenant au moins un chalcogénure, caractérisée en ce que ledit matériau contient en outre une quantité efficace de carbone et/ou de bore et en ce qu'il possède une valeur de coefficient de variation relative de la résistivité avec la température (TCR), à 300 °C, au moins égale à 40 % de la valeur native du coefficient de variation relative de la résistivité avec la température dudit matériau à température ambiante.

Au sens de la présente invention, on entend par « quantité efficace », la quantité de carbone et/ou de bore avantageusement nécessaire pour conférer audit matériau une valeur de TCR, à 300 °C, au moins égale à 40 % de la valeur native du TCR dudit matériau à température ambiante. Cette quantité de carbone et/ou de bore est à considérer au regard de l'alliage associé et peut par conséquent varier d'un alliage à un autre. A partir de ses connaissances générales, l'homme du métier est apte à ajuster la quantité de carbone et/ou de bore nécessaire pour conférer audit matériau la valeur de TCR souhaitée.

L'invention concerne ainsi plus précisément l'utilisation comme matériau sensible en couche mince pour la détection bolométrique, d'au moins un matériau à base d'un alliage comprenant au moins un chalcogénure, l'élément chalcogène étant choisi parmi le soufre, le sélénium, le tellure et leurs mélanges, caractérisée en ce que ledit matériau contient en outre une quantité de carbone et/ou de bore suffisante pour conférer au matériau une valeur de coefficient de variation relative de la résistivité avec la température (TCR), à 300 °C, au moins égale à 40 % de la valeur native du coefficient de variation relative de la résistivité avec la température dudit matériau à température ambiante.

Dans la suite du texte, on parlera d'« alliage de base » pour désigner l'alliage comprenant au moins un chalcogénure. L'alliage de base s'entend au sens de l'invention d'un mélange d'éléments chimiques purs contenant au moins un élément métal ou métalloïde et au moins un chalcogène.

Un « chalcogénure » est un composé chimique contenant au moins un élément chalcogène. L'élément chalcogène est choisi parmi le soufre, le sélénium, le tellure et leurs mélanges. Le tellure de cadmium est par exemple un chalcogénure.

En particulier, l'alliage de base selon l'invention présente une valeur de TCR élevée, typiquement supérieure à 2 en valeur absolue, et constitue déjà un matériau bolométrique.

Le matériau selon l'invention constitué de l'alliage de base et de la quantité suffisante de carbone et/ou de bore forme un alliage dit « modifié ». Dans l'alliage modifié, et à l'échelle de quelques distances interatomiques, par exemple 3 à 5, l'ordre est défini par les atomes qui forment l'alliage de base. A l'instar des composés amorphes, on peut parler d'« ordre local » dont la caractérisation peut se faire par spectroscopie d'absorption des rayons X.

Le carbone et/ou le bore de l'alliage modifié selon l'invention peuvent être désignés sous l'appellation « éléments additionnels ». Un composé de l'alliage modifié est dit « élément additionnel » s'il peut être retiré sans que le matériau perde sa qualité bolométrique (coefficient TCR supérieur à 2).De manière inattendue, les inventeurs ont découverts que l'association, sous forme de couches minces, d'un alliage comprenant au moins un chalcogénure, avec une quantité efficace de carbone et/ou de bore, s'avère particulièrement efficace à titre de matériaux sensibles pour les dispositifs bolométriques de détection de l'infrarouge. Ces matériaux ne présentent en outre aucun problème d'intégration dans un système bolométrique.

Les inventeurs ont en effet constaté de manière surprenante que le coefficient TCR des matériaux tels que définis ci-dessus ne diminue pas de manière significative lorsqu'ils sont exposés à haute température. Ils peuvent être ainsi exposés, si nécessaire, à la température requise pour effectuer un dépôt d'encapsulation, indispensable pour les protéger des conditions oxydantes de libération de la planche bolométrique, tout en conservant un coefficient TCR élevé.

La présente invention concerne en outre, selon un autre de ses aspects, un dispositif bolométrique pour la détection d'un rayonnement infrarouge ou pour l'imagerie infrarouge, comprenant au moins un capteur muni d'un élément sensible à base d'un matériau tel que défini ci-dessus.

Avantageusement, le capteur est inséré dans un boîtier comportant une fenêtre d'entrée transparente à l'infrarouge, et comprend en outre une membrane capable d'absorber un rayonnement infrarouge et de le convertir en chaleur, ladite membrane étant disposée de façon à pouvoir être exposée à un rayonnement infrarouge incident ayant traversé la fenêtre d'entrée, et à transmettre une partie de la chaleur ainsi produite audit élément sensible.

Selon encore un autre de ses aspects, la présente invention concerne un procédé de fabrication d'un dispositif bolométrique comprenant au moins les étapes suivantes :

i) disposer d'un capteur muni d'une membrane capable d'absorber le rayonnement infrarouge, déposée sur un support constitué d'une couche sacrificielle ; et

ii) former au contact de ladite membrane une couche mince d'un élément sensible à partir d'un matériau tel que défini précédemment.

Selon une variante préférée, l'étape ii) est suivie d'une étape iii) dans laquelle ladite couche mince est encapsulée par une couche dite d'encapsulation, notamment à base de SiN.

En particulier, l'étape iii) est suivie d'une étape iv) dans laquelle la couche sacrificielle est calcinée sous des conditions oxydantes, de préférence sous plasma d'ozone.

Selon une autre variante préférée, le dispositif bolométrique est soumis, après l'étape iv), à au moins une étape de recuit à une température comprise entre 300 °C et 400°C, de préférence comprise entre 320 °C et 400 °C.

Une telle étape de recuit additionnel permet avantageusement au matériau d'optimiser sa résistivité pour une application en bolométrie tout en conservant un coefficient TCR élevé.

## Matériau sensible

De manière inattendue, les inventeurs ont donc constaté que l'association d'un matériau à base d'un alliage comprenant au moins un chalcogénure et d'une quantité efficace de carbone et/ou de bore permet d'accéder à un matériau sensible pour les dispositifs bolométriques de détection de l'infrarouge avantageusement doté d'une résistivité électrique modérée, d'un faible bruit basse séquence et d'une grande sensibilité à la température.

On exprime la sensibilité d'un matériau pour détecteur bolométrique à l'aide du coefficient de température $\alpha$ qui représente la dérivée de la résistance par rapport à la température, divisée par la résistance :

$$\alpha = \frac{dR}{dT} \times \frac{1}{R} \times 100$$

Le coefficient $\alpha$ est exprimé en %.Kelvin$^{-1}$ (%.K$^{-1}$).

Comme précisé ci-dessus, le coefficient TCR des matériaux selon l'invention ne diminue pas de manière significative lorsqu'ils sont exposés à haute température. Ils peuvent être ainsi exposés aux températures requises à l'élaboration du système bolométrique.

Ainsi, selon l'invention, le matériau sensible utilisé dans un dispositif bolométrique possède une valeur de coefficient de variation relative de la résistivité avec la température, à 300 °C, au moins égale à 40 % de la valeur native du coefficient de variation relative de la résistivité avec la température dudit matériau à température ambiante.

Selon un mode de réalisation préféré, la valeur du coefficient de variation relative de la résistivité avec la température, à 300 °C, du matériau sensible utilisé selon la présente invention, est au moins égale à 60 %, de préférence au moins égale à 75 %, en particulier au moins égale à 90 %, de la valeur native du coefficient de variation relative de la résistivité avec la température dudit matériau à température ambiante.

De manière préférée, le chalcogénure présent dans l'alliage de base contient un chalcogène choisi parmi le soufre, le sélénium, le tellure et leurs mélanges. En particulier, il s'agit du tellure.

Selon un mode de réalisation particulier, l'alliage de base comprend en outre au moins un élément choisi parmi l'antimoine, le germanium, l'étain, le bismuth et leurs mélanges.

De préférence, l'alliage de base comprend au moins du germanium.

Plus préférentiellement, l'alliage de base comprend de 40 % à 70 % atomique de tellure, de 5 % à 60 % atomique de germanium, de 0 % à 50 % atomique d'un élément X choisi parmi l'antimoine, l'étain ou le bismuth et de 0 % à 50 % atomique d'un élément Y, différent de l'élément X, choisi parmi l'antimoine, l'étain ou le bismuth.

Selon une première variante préférée, l'alliage de base comprend de 40 % à 60 % atomique de tellure et de 40 % à 60 % atomique de germanium.

Selon une seconde variante préférée, l'alliage de base comprend de 48 % à 64 % atomique de tellure, de 18 % à 26 % atomique de germanium et de 18 % à 26 % atomique d'antimoine.

Selon un autre mode de réalisation préféré, l'alliage de base comprenant au moins un chalcogénure répond à la formule :

$$Te_{(i)}Ge_{(j)}X_{(k)}Y_{(l)}$$

dans laquelle,

- X et Y représentent, indépendamment l'un de l'autre, un élément choisi parmi l'antimoine, l'étain ou le bismuth ;
- (i) varie de 0,4 à 0,7 ;
- (j) varie de 0,05 à 0,6 ;
- (k) varie de 0 à 0,5 ;
- (l) varie de 0 à 0,5 ;

avec la somme de (i) + (j) + (k) + (1) étant égale à 1.

De préférence, la valeur de (i) est supérieure à la valeur de (j).

De manière préférée, la valeur de k est différente de 0.

Selon un mode de réalisation préféré, le matériau sensible contient au moins une quantité efficace de carbone. L'homme du métier est apte à déterminer la quantité nécessaire pour conférer audit matériau la valeur de TCR souhaitée.

En particulier, le matériau contient entre 5 % et 60 % atomique, de préférence entre 15 % et 45 % atomique, et mieux entre 17 % et 30 % atomique, de carbone par rapport à la composition atomique dudit matériau.

Ainsi, selon un mode de réalisation préféré, le matériau sensible selon l'invention utilisé dans un dispositif bolométrique répond à la formule :

$$Te_{(i)}Ge_{(j)}X_{(k)}Y_{(l)}C_{(m)}$$

dans laquelle,

- X et Y représentent, indépendamment l'un de l'autre, un élément choisi parmi l'antimoine, l'étain ou le bismuth ;
- (i) varie de 0,3 à 0,7 ;
- (j) varie de 0,03 à 0,6 ;
- (k) varie de 0 à 0,5 ;
- (l) varie de 0 à 0,5 ;
- (m) varie de 0,05 à 0,6 ;

avec la somme de (i) + (j) + (k) + (1) + (m) étant égale à 1.

La composition atomique du matériau sensible peut être caractérisée par RBS (Rutherford Backscattering Spectrometry) et PIXE (Particle Induced X-Ray Emission) pour les éléments lourds (Te, Ge, Sb, Bi, Sn) et par NRA (Nuclear Reaction Analysis) pour les éléments légers (C et B).

## Dispositif bolométrique

Comme précisé précédemment, un autre aspect de l'invention concerne un dispositif bolométrique pour la détection d'un rayonnement infrarouge ou pour l'imagerie infrarouge, comprenant au moins un capteur muni d'un élément sensible à base d'un matériau tel que défini précédemment.

Avantageusement, l'élément sensible est mis en oeuvre sous la forme d'une couche mince. De préférence, une telle couche mince présente une épaisseur allant de 10 à 500 nm.

Selon un mode particulier du dispositif bolométrique de l'invention, le capteur, qui est inséré dans un boîtier comportant une fenêtre d'entrée transparente à l'infrarouge, comprend en outre une membrane capable d'absorber un rayonnement infrarouge et de le convertir en chaleur, ladite membrane étant disposée de façon à pouvoir être exposée à un rayonnement infrarouge incident ayant traversé la fenêtre d'entrée, et à transmettre une partie de la chaleur ainsi produite audit élément sensible.

L'invention concerne également le procédé de fabrication d'un tel dispositif bolométrique comprenant au moins les étapes suivantes :

i) disposer d'un capteur muni d'une membrane capable d'absorber le rayonnement infrarouge, déposée sur un support constitué d'une couche sacrificielle ; et

ii) former au contact de ladite membrane une couche mince d'un élément sensible à partir d'un matériau tel que défini précédemment.

Afin de former la couche mince de l'élément sensible, le matériau selon l'invention peut par exemple être déposé sur la membrane selon une technique de co-pulvérisation.

Ainsi, selon un mode de réalisation particulier, l'alliage à base de chalcogénure et le carbone ou le bore sont déposés par une technique de co-pulvérisation à partir de deux cibles, l'une constituée de carbone ou du bore pur et l'autre de l'alliage à base de chalcogénure. Plus précisément, l'équipement de pulvérisation est constitué de trois cibles de 76 mm de diamètre disposées en « bouquet », permettant la co-pulvérisation. L'inclinaison des cibles est de 60 ° par rapport à l'horizontale et la distance cible-substrat est de 37 mm.

La pression résiduelle de la chambre est de $2.10^{-7}$ mbar et la pression de travail (pendant la co-pulvérisation) est de $4.10^{-3}$ mbar. L'argon est utilisé comme gaz porteur. La composition en carbone ou en bore de l'alliage modifié est obtenue en appliquant sur chacune des deux cibles des valeurs de courant adéquates. Par exemple, la composition $Ge_{19\pm1}Sb_{19\pm1}Te_{40\pm2.5}C_{22\pm1at\%}$ est obtenue en appliquant un courant de 200 mA et de 80 mA sur les cibles de C et de $Ge_2Sb_2Te_5$ respectivement. La vitesse de dépôt de cet alliage modifié est de 2,1 Å/s.

Selon d'autres modes de réalisation, le dépôt du matériau sensible, dédié à former la couche mince, peut être également effectué par des techniques de pulvérisation par IBS (Ion Beam Sputtering) ou par des techniques d'ALD (Atomic Layer Deposition).

En ce qui concerne la membrane sur laquelle est formée la couche mince à base du matériau selon l'invention, elle peut être constituée par exemple d'une ou plusieurs couche(s) diélectrique(s) notamment de SiO et/ou de SiN.

Dans le cas d'une unique couche, celle-ci peut être recouverte partiellement par des électrodes notamment de TiN possédant une forte absorption du rayonnement infrarouge. Dans le cas de deux couches, les électrodes peuvent être soit apposées en surface de la couche externe soit enfermées entre les deux couches.

Selon un mode de réalisation particulièrement avantageux, l'étape ii) du procédé de fabrication est suivie d'une étape iii) dans laquelle ladite couche mince est encapsulée par une couche dite d'encapsulation, notamment à base de SiN.

De préférence, cette étape iii) est suivie d'une étape iv) dans laquelle la couche sacrificielle est calcinée sous des conditions oxydantes, de préférence sous plasma d'ozone.

Comme précisé précédemment, le dispositif bolométrique est avantageusement soumis, après l'étape iv), à au moins une étape de recuit à une température comprise entre 300 °C et 400 °C, de préférence comprise entre 320 °C et 400 °C.

En particulier, l'étape de recuit peut être effectuée sous vide ou sous atmosphère inerte. La température de l'étape de recuit peut être atteinte par pallier de température, notamment par rampe de 10 °C/min et éventuellement comprendre un recuit isotherme.

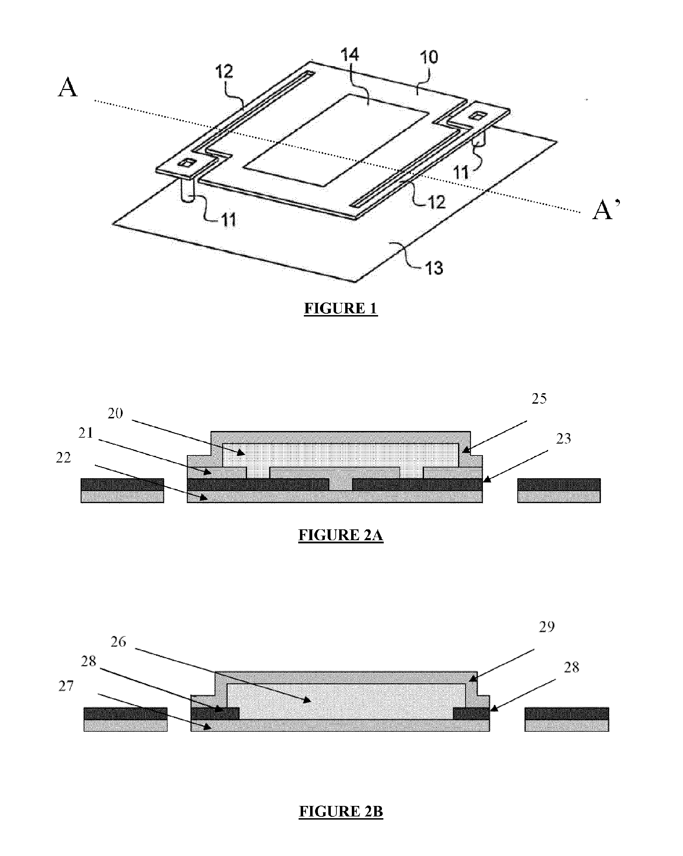

En figure 1 est représentée une vue simplifiée d'un dispositif bolométrique selon l'invention.

Le dispositif bolométrique qui y est représenté comprend une fine membrane 10 capable d'absorber le rayonnement infrarouge, et suspendue au-dessus d'un support 13 par l'intermédiaire de points d'ancrage 11. Une couche sensible 14 est déposée sur la membrane 10. Cette couche 14 est encapsulée par une couche d'encapsulation, non représentée sur la figure 1, qui la protège lors des opérations technologiques ultérieures au dépôt de la couche 14. Sous l'effet d'un rayonnement infrarouge, la membrane 10 s'échauffe et transmet sa température à la couche 14. L'interconnexion électrique entre la couche sensible 14 et les éléments de lecture (non représentés) disposés sur le substrat est assurée par une couche, généralement métallique, non représentée, passant par les points d'ancrage 11. La sensibilité de la détection thermique est notablement améliorée en introduisant des bras d'isolement 12 entre le substrat support et la membrane afin de limiter les pertes thermiques de cette dernière. Les variations de résistivité de la couche sensible sont enregistrées à l'aide d'un circuit de lecture approprié.

Dans les dispositifs bolométriques selon l'invention, le substrat support peut être constitué d'un circuit électronique intégré sur une plaquette de silicium comprenant d'une part des dispositifs de stimuli et de lecture des variations de températures et d'autre part les composants de multiplexage qui permettent de sérialiser les signaux issus des différents thermomètres et de les transmettre vers un nombre réduit de sorties afin d'être exploités par un système d'imagerie usuel.

La figure 2 représente une coupe de la figure 1 selon AA' et illustre deux variantes d'intégration d'une couche mince de matériau selon l'invention dans un détecteur à électrodes coplanaires.

En figure 2A, la structure supportant une couche mince 20 de matériau selon l'invention est constituée de deux couches isolantes 21 et 22 enfermant les électrodes métalliques 23. La couche isolante 22 déposée sur la couche métallique comporte des ouvertures de contact de manière à connecter l'élément sensible. La couche 25 est la couche d'encapsulation, par exemple en SiN, pouvant être nécessaire à la protection du matériau pendant l'étape technologique de libération de la couche sacrificielle, notamment en polyimide, réalisée dans un plasma d'ozone.

En figure 2B, la structure supportant une couche mince 26 de matériau selon l'invention est constituée d'une unique couche isolante 27 sur laquelle reposent les électrodes métalliques 28 directement en contact avec l'élément sensible 26. Dans cette configuration, il peut être intéressant de déposer une couche absorbant le rayonnement infrarouge sur l'une des faces de la structure.

Comme sur la figure 2A, le matériau selon l'invention 26 est recouvert par une couche d'encapsulation 29, par exemple en SiN.

Dans ces deux variantes de réalisation, la gravure d'une couche mince de matériau selon l'invention permet de supprimer le matériau dans la région des bras d'isolement et dans les régions séparant les détecteurs entre eux.

Ces deux modes de réalisation conduisent avantageusement à un composant optimisé en termes de rapport signal sur bruit.

Il est entendu que les dispositifs bolométriques conformes à l'invention peuvent comprendre une pluralité de capteurs sous la forme d'un réseau matriciel de pixels. Un tel réseau de capteurs peut être connecté par exemple à un circuit de lecture CCD ou CMOS. Avec un système d'imagerie approprié, le dispositif de l'invention constitue alors une caméra infrarouge.

Les dispositifs bolométriques de l'invention peuvent également être intégrés dans des structures dites monolithiques, fabriquées de manière collective par les procédés de micro-électronique qui ont été développés pour le silicium.

Ainsi, des imageurs infrarouges monolithiques, fonctionnant à température ambiante, peuvent être fabriqués en connectant directement une matrice d'éléments sensibles à un circuit de multiplexage de type CMOS ou CCD. Le substrat support peut être constitué d'un circuit électronique intégré comprenant d'une part des dispositifs de stimulis et de lecture et d'autre part les composants de multiplexage qui permettent de sérialiser les signaux issus des différents détecteurs et de les transmettre vers un nombre réduit de sorties pour être exploités par un système d'imagerie usuelle.

Dans de tels dispositifs, les supports isolants sont réalisés sous forme de couches minces ayant par exemple une épaisseur de 5 à 100 nm. Ces éléments isolants (par exemple SiN, SiO, ZnS, etc.) sont obtenus à l'aide des techniques de dépôt à basse température habituellement utilisées pour ces matériaux, telles que la pulvérisation cathodique ou le dépôt chimique en phase vapeur assisté plasma (PECVD). La gravure de ces matériaux est généralement réalisée par des procédés d'attaque chimique assistée par plasma.

Les matériaux métalliques constituant les électrodes (par exemple Ti, TiN, Pt, etc.) sont préférentiellement déposés par pulvérisation cathodique. La forme des électrodes est définie par des procédés de gravure chimique ou par plasma. L'épaisseur des électrodes est comprise par exemple entre 5 nm et 100 nm. Les électrodes qui se prolongent dans les bras d'isolement sont connectées à l'étage d'entrée du circuit de lecture par des procédés classiques de reprise de contact, et sont adaptées à la structure du micro-pont (analogue aux points d'ancrage 11 de la figure 1).

Le matériau est déposé sous l'aspect d'une couche mince selon l'invention, à l'aide de la technique de copulvérisation ou par des techniques de pulvérisation par IBS ou par des techniques d'ALD, mentionnées précédemment. Sa gravure peut être réalisée par voie chimique (HCl, $H_3PO_4$) ou par des procédés de gravure plasma spécifiques, ou encore par usinage ionique.

L'invention concerne également un procédé de détection d'un rayonnement infrarouge ou de production d'imagerie infrarouge, à l'aide d'un dispositif bolométrique capable d'absorber un rayonnement incident, de le convertir en chaleur, et de communiquer une partie de la chaleur produite à un élément sensible dont la résistivité varie avec la température, dans lequel ledit dispositif est tel que défini précédemment.

Le dispositif de l'invention est utilisable dans de nombreux domaines d'application, par exemple dans le domaine militaire (dispositifs de visée et d'exploration nocturne), dans le domaine industriel (contrôle de pièces), dans le domaine de la sécurité (détection d'incendies, repérage de victimes dans des pièces enfumées, surveillance nocturne des sites, assistance à la conduite nocturne de véhicules), ou dans le domaine médical (cartographie de circulation sanguine, mammographie, etc.).

Les exemples et figures qui suivent sont présentés à titre illustratif et non limitatif du domaine de l'invention.

## FIGURE

La figure 1 représente schématiquement une vue en perspective simplifiée d'un mode de réalisation d'un dispositif bolométrique selon l'invention.

La figure 2 représente une coupe de la figure 1 selon AA' et rend compte de deux variantes d'intégration d'une couche mince de matériau selon l'invention dans un détecteur à électrodes coplanaires.

## EXEMPLE

**Synthèse de matériaux conformes à l'invention et caractérisation de leur valeur du coefficient de variation de la résistivité avec la température (TCR) et de leur température de recuit d'ajustement de la résistivité**

*a) Synthèse des matériaux*

Des matériaux thermomètres à base d'un alliage GeTe ou $Ge_2Sb_2Te_5$, ou d'un alliage GeSbTe avec différents pourcentages de carbone sont réalisés.

L'alliage est déposé par une technique de co-pulvérisation à partir de deux cibles, l'une comportant du carbone pur et l'autre de l'alliage à base de chalcogénure. L'équipement de pulvérisation comporte trois cibles disposées en « bouquet », permettant la co-pulvérisation. L'inclinaison des cibles est de 60 °C par rapport à l'horizontale et la distance cible-substrat est de 37 mm.

La pression résiduelle de la chambre est de $2.10^{-7}$ mbar et la pression de travail (pendant la co-pulvérisation) est de $4.10^{-3}$ mbar. L'argon est utilisé comme gaz porteur. La variation de composition en carbone de l'alliage est obtenue en modifiant la valeur des courants appliqués sur chacune des deux cibles. Par exemple, la composition $Ge_{19\pm1}Sb_{19\pm1}Te_{40\pm2.5}C_{22\pm1at\%}$ est obtenue en appliquant un courant de 200 mA et de 80 mA sur les cibles de C et de $Ge_2Sb_2Te_5$ respectivement. La vitesse de dépôt de cet alliage est de 2.1 Å/s.

Les matériaux sont déposés sur une couche de $SiO_2$ de 750 nm pour former une couche de 100 nm.

*b) Mesures du coefficient TCR*

Des mesures du coefficient de variation de la résistivité avec la température (TCR) sont effectuées sur les différents matériaux.

En particulier, le TCR de chaque matériau est mesuré par une technique classique de mesure de résistivité électrique de couches déposées sur isolant (« méthode 4 pointes »). Le dispositif de mesure comprend, en outre, une plaque chauffante permettant de réguler la température de la couche à $\pm0,1$ °C et de mesurer sa résistivité $\rho_{28}$ et $\rho_{32}$ à respectivement 28 °C ($T_{28}$) et 32 °C ($T_{32}$).

Le TCR du matériau à la température ambiante est obtenu via la relation :

$$TCR = 1/((\rho_{32}+\rho_{28})/2) . ((\rho_{32}-\rho_{28})/ (T_{32}-T_{28}))$$

Sa valeur après dépôt par pulvérisation (matériau tel que déposé) est comparé à celle mesurée lorsque la température est redescendu à température ambiante (30 °C) sur le même échantillon après qu'il ait été exposé à une température de 300 °C pendant 5 secondes dans un four sous atmosphère d'argon ou sous vide.

Les résultats sont exposés dans le tableau 1 ci-dessous.

Tableau 1

| Matériau | TCR mesuré sur matériau avant exposition (%.K$^{-1}$) (+/- 0,3 %.K$^{-1}$) | TCR mesuré sur matériau après exposition à 300 °C pendant 5 secondes (%.K$^{-1}$) (+/- 0,3 %.K$^{-1}$) |
|---|---|---|
| GeTe *(Comparatif)* | -4,7 | -0,2 |
| Alliage GeTe + C : $Ge_{48\pm3}Te_{42\pm3}C_{10\pm1,5at\%}$ | -5,1 | -4,9 |
| $Ge_2Sb_2Te_5$ *(Comparatif)* | -4,7 | -0,6 |
| Alliage $Ge_2Sb_2Te_5$ + C : $Ge_{19\pm1}Sb_{19\pm1}Te_{40\pm2.5}C_{17+1at\%}$ *(Comparatif)* | -4,6 | -0,34 |
| Alliage $Ge_2Sb_2Te_5$ + C : $Ge_{19\pm1}b_{19\pm1}Te_{40\pm2.5}C_{22\pm1at\%}$ | -5,6 | -5,4 |
| Alliage $Ge_2Sb_2Te_5$ + C : $Ge_{15\pm1}Sb_{15\pm1}Te_{30\pm2.5}C_{40\pm1at\%}$ | -5,3 | -4,2 |

Lorsque l'alliage à base de chalcogénure est associé à du carbone en quantité suffisante (comme par exemple de l'ordre de 22 % pour le chalcogénure $Ge_2Sb_2Te_5$), le matériau conserve une valeur de TCR élevée après exposition à une température de 300 °C. Par conséquent, il est approprié pour une application bolométrique.

Au contraire, l'exposition des alliages à base de chalcogénure seuls à 300 °C ou avec une quantité non efficace de carbone entraine une diminution significative de la valeur de TCR. Une telle diminution de la valeur de TCR rend le matériau inutilisable pour l'application en bolométrie.

*c) Détermination de la températures de recuis d'ajutstement de la résistivité*

Des mesures de résistivité et de TCR des matériaux thermomètres sont effectuées à une température de 30 °C après un recuit à différentes températures pendant 5 secondes dans un four sous atmosphère neutre d'argon ou sous vide.

Le TCR de chaque matériau est mesuré tel qu'indiqué au point b) ci-dessus.

La résistivité à la température ambiante est :

$$\rho = (\rho_{32} + \rho_{28})/2$$

L'ensemble des résultats est détaillé dans le tableau 2.

## Tableau 2

| Matériau | | Alliage 1 GeSbTe + 22 %C : $Ge_{19\pm1}Sb_{19\pm1}Te_{40\pm2.5}C_{22\pm1at\%}$ | Alliage 2 GeSbTe + 40 %C : $Ge_{15\pm1}Sb_{15\pm1}Te_{30\pm2.5}C_{40\pm1at\%}$ |
|---|---|---|---|
| Matériau avant exposition | TCR (%.K$^{-1}$) (+/- 0,3 %.K$^{-1}$) | -5,6 | -5,3 |
| | $\rho$ (ohm.cm) | 1,8$^E$4 | 1,9$^E$4 |
| Matériau après exposition à 300 °C pendant 5 secondes | TCR (%.K$^{-1}$) (+/- 0,3 %.K$^{-1}$) | -5,4 | -4,2 |
| | $\rho$ (ohm.cm) | 1,6$^E$4 | 1,8$^E$4 |
| Matériau dans le dispositif bolométrique après exposition à 325 °C pendant 5 secondes | TCR (%.K$^{-1}$) (+/- 0,3 %.K$^{-1}$) | -3,35 | -2,7 |
| | $\rho$ (ohm.cm) | 194 | 275 |
| Matériau dans le dispositif bolométrique après exposition à 330 °C pendant 5 secondes | TCR (%.K$^{-1}$) (+/- 0,3 %.K$^{-1}$) | -3,0 | -2,5 |
| | $\rho$ (ohm.cm) | 58 | 133 |
| Matériau dans le dispositif bolométrique après exposition à 340 °C pendant 5 secondes | TCR (%.K$^{-1}$) (+/- 0,3 %.K$^{-1}$) | -2,4 | -2,28 |
| | $\rho$ (ohm.cm) | 31 | 35 |

L'application d'une étape de recuit au dispositif bolométrique comportant un matériau thermomètre à base d'un alliage GeSbTe associé à du carbone permet à la fois de conserver une valeur de TCR élevée et une résistivité permettant un fonctionnement optimal du système de lecture.

Dans le cas de $Ge_{19\pm1}Sb_{19\pm1}Te_{40\pm2.5}C_{22\pm1at\%}$, un recuit à 330 °C permet d'obtenir une résistivité inférieure à 100 Ohm.cm.

Dans le cas de $Ge_{15\pm1}Sb_{15}\pm1Te_{30\pm2.5}C_{40\pm1at\%}$, un recuit à 340 °C permet d'obtenir une résistivité inférieure à 100 Ohm.cm.

*d) Préparation des microbolomètres*

La température de recuit d'ajustement de la résistivité étant déterminée en c), ce recuit est réalisé avant la mise en boitier du microbolomètre, après l'étape iv) de calcination de la couche sacrificielle décrite plus haut.

**Revendications**

1.  Utilisation comme matériau sensible en couche mince pour la détection bolométrique, d'au moins un matériau à base d'un alliage comprenant au moins un chalcogénure, l'élément chalcogène étant choisi parmi le soufre, le sélénium, le tellure et leurs mélanges, **caractérisée en ce que** ledit matériau contient en outre une quantité de carbone et/ou de bore suffisante pour conférer au matériau une valeur de coefficient de variation relative de la résistivité avec la température, à 300 °C, au moins égale à 40 % de la valeur native du coefficient de variation relative de la résistivité avec la température dudit matériau à température ambiante.

2.  Utilisation selon la revendication 1, **caractérisée en ce que** la valeur du coefficient de variation relative de la résistivité avec la température, à 300 °C, est au moins égale à 60 %, de préférence au moins égale à 75 %, en particulier au moins égale à 90 %, de la valeur native du coefficient de variation relative de la résistivité avec la température dudit matériau à température ambiante.

3.  Utilisation selon l'une quelconque des revendications précédentes, **caractérisée en ce que** l'alliage comprend au moins du tellure.

4.  Utilisation selon l'une quelconque des revendications précédentes, **caractérisée en ce que** ledit matériau contient au moins une quantité de carbone suffisante pour conférer au matériau une valeur de coefficient de variation relative de la résistivité avec la température, à 300 °C, au moins égale à 40 % de la valeur native du coefficient de variation relative de la résistivité avec la température dudit matériau à température ambiante.

5.  Utilisation selon l'une quelconque des revendications précédentes, **caractérisée en ce que** ledit matériau contient entre 5 % et 60 % atomique, de préférence entre 15 % et 45 % atomique, et mieux entre 17 % et 30 % atomique, de carbone par rapport à la composition atomique dudit matériau.

6.  Utilisation selon l'une quelconque des revendications précédentes, **caractérisée en ce que** l'alliage comprend en outre au moins un élément choisi parmi l'antimoine, le germanium, l'étain, le bismuth et leurs mélanges.

7.  Utilisation selon l'une quelconque des revendications précédentes, **caractérisée en ce que** l'alliage comprend en outre au moins du germanium.

8.  Utilisation selon l'une quelconque des revendications précédentes, **caractérisée en ce que** l'alliage comprend de 40 % à 70 % atomique de tellure, de 5 % à 60 % atomique de germanium, de 0 % à 50 % atomique d'un élément X choisi parmi l'antimoine, l'étain ou le bismuth et de 0 % à 50 % atomique d'un élément Y, différent de l'élément X, choisi parmi l'antimoine, l'étain ou le bismuth.

9.  Utilisation selon l'une quelconque des revendications précédentes, **caractérisée en ce que** l'alliage comprend de 40 % à 60 % atomique de tellure et de 40 % à 60 % atomique de germanium.

10. Utilisation selon l'une quelconque des revendications 1 à 8, **caractérisée en ce que** l'alliage comprend de 48 % à 64 % atomique de tellure, de 18 % à 26 % atomique de germanium et de 18 % à 26 % atomique d'antimoine.

11. Dispositif bolométrique pour la détection d'un rayonnement infrarouge ou pour imagerie infrarouge, comprenant au moins un capteur muni d'un élément sensible à base d'un matériau tel que défini dans l'une quelconque des revendications 1 à 10.

12. Dispositif bolométrique selon la revendication 11, **caractérisé en ce que** l'élément sensible est mis en oeuvre sous la forme d'une couche mince.

13. Dispositif bolométrique selon la revendication 12, **caractérisé en ce que** la couche mince présente une épaisseur allant de 10 nm à 500 nm.

14. Dispositif bolométrique selon l'une quelconque des revendications 11 à 13, **caractérisé en ce que** le capteur est inséré dans un boîtier comportant une fenêtre d'entrée transparente à l'infrarouge, et comprend en outre une membrane capable d'absorber un rayonnement infrarouge et de le convertir en chaleur, ladite membrane étant disposée de façon à pouvoir être exposée à un rayonnement infrarouge incident ayant traversé la fenêtre d'entrée, et à transmettre une partie de la chaleur ainsi produite audit élément sensible.

15. Dispositif selon l'une quelconque des revendications 11 à 14, comprenant une pluralité desdits capteurs sous la forme d'un réseau matriciel de pixels.

16. Dispositif selon la revendication 15, **caractérisé en ce que** ledit réseau est connecté à un circuit de lecture CCD ou CMOS.

17. Procédé de fabrication d'un dispositif bolométrique comprenant au moins les étapes suivantes :

i) disposer d'un capteur muni d'une membrane capable d'absorber le rayonnement infrarouge, déposée sur un support constitué d'une couche sacrificielle ; et
ii) former au contact de ladite membrane une couche mince d'un élément sensible à partir d'un matériau tel que défini selon l'une quelconque des revendications 1 à 10.

18. Procédé selon la revendication 17, **caractérisé en ce que** ladite membrane est constituée d'une ou de plusieurs couche(s) diélectrique(s), notamment de SiO et/ou de SiN.

19. Procédé selon l'une quelconque des revendications 17 ou 18, **caractérisé en ce que** l'étape ii) est suivie d'une étape iii) dans laquelle ladite couche mince est encapsulée par une couche dite d'encapsulation, notamment à base de SiN.

20. Procédé selon la revendication 19, **caractérisé en ce que** l'étape iii) est suivie d'une étape iv) dans laquelle la couche sacrificielle est calcinée sous des conditions oxydantes, de préférence sous plasma d'ozone.

21. Procédé selon l'une quelconque des revendications 17 à 20, **caractérisé en ce que** le dispositif bolométrique est soumis, après l'étape iv), à au moins une étape de recuit à une température comprise entre 300 °C et 400 °C, de préférence comprise entre 320 °C et 400 °C.

22. Procédé selon la revendication 21, **caractérisé en ce que** la température de l'étape de recuit est atteinte par pallier de température, notamment par rampe de 10°C/min.

23. Procédé selon la revendication 21 ou 22, **caractérisé en ce que** l'étape de recuit comprend un recuit isotherme.

24. Procédé selon l'une quelconque des revendications 21 à 23, **caractérisé en ce que** l'étape de recuit est effectuée sous vide ou sous atmosphère inerte.

**FIGURE 1**

**FIGURE 2A**

**FIGURE 2B**

Europäisches
Patentamt

European
Patent Office

Office européen
des brevets

**RAPPORT DE RECHERCHE EUROPEENNE**

Numéro de la demande

EP 15 15 0357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/134939 A1 (GIEDD RYAN E [US]) 26 septembre 2002 (2002-09-26) * alinéas [0040], [0041], [0042], [0046], [0050], [0084], [0089] * ----- | 1-24 | INV. G01J5/04 G01J5/20 G01J5/22 G01J5/24 |
|  |  |  | DOMAINES TECHNIQUES RECHERCHES (IPC) |
|  |  |  | G01J |

Le présent rapport a été établi pour toutes les revendications

| Lieu de la recherche | Date d'achèvement de la recherche | Examinateur |
|---|---|---|
| Munich | 29 avril 2015 | Jacquin, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 15 0357

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2015

| Document brevet cité au rapport de recherche | Date de publication | Membre(s) de la famille de brevet(s) | Date de publication |
|---|---|---|---|
| US 2002134939 A1 | 26-09-2002 | US 2002134939 A1<br>WO 02075265 A1 | 26-09-2002<br>26-09-2002 |

Pour tout renseignement concernant cette annexe : voir Journal Officiel de l'Office européen des brevets, No.12/82

EPO FORM P0460

## RÉFÉRENCES CITÉES DANS LA DESCRIPTION

**Documents brevets cités dans la description**

- US 3781748 A
- US 3767928 A

- US 20120132804 A